# EUROPÄISCHE PATENTANMELDUNG

(11) **EP 1 492 371 A1**
(43) Veröffentlichungstag der Anmeldung: **29.12.2004**
(21) Anmeldenummer: 03014293.9
(22) Anmeldetag: 25.06.2003
(51) Int. Cl.: H04Q 7/38

(54) **Zugriffsverfahren auf ein Frequenzband eines Funkkommunikationssystems über ein anderes Frequenzband**

(71) Anmelder: SIEMENS AKTIENGESELLSCHAFT, 80333 München (DE)
(72) Erfinder: Dillinger, Markus, 81737 München (DE); Schulz, Egon, Dr., 80993 München (DE); Mohyeldin, Eiman Bushra, 81476 München (DE); Luo, Jijun, 81677 München (DE)

(57) **Zusammenfassung**

Die Erfindung betrifft ein Verfahren zum Betreiben eines Funkkommunikationssystems (SYS1) mit einer Mehrzahl von Teilnehmerstationen, wobei in dem Funkkommunikationssystem (SYS1) zur Kommunikation von Teilnehmerstationen mindestens ein erstes (F11) und mindestens ein zweites (F_{shared}) Frequenzband zur Verfügung stehen. Erfindungsgemäß erfolgt in dem Funkkommunikationssystem (SYS1) die Kommunikation von Teilnehmerstationen auf dem mindestens einen zweiten Frequenzband (F_{Shared}) nach erfolgreichem Zufallszugriff (RA) auf Funkressourcen des mindestens einen ersten Frequenzbandes (F11). Weiterhin betrifft die Erfindung ein Funkkommunikationssystem (SYS1) und eine Netzeinrichtung zur Durchführung des Verfahrens.

## Beschreibung

Die Erfindung betrifft ein Verfahren zum Betreiben eines Funkkommunikationssystems nach dem Oberbegriff des Anspruchs 1.

Weiterhin betrifft die Erfindung ein Funkkommunikationssystem nach dem Oberbegriff des Anspruchs 10 und eine Netzeinrichtung nach dem Oberbegriff des Anspruchs 11.

In Funkkommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Funkzugangseinrichtungen, wie z.B. Basisstationen oder Funkzugangspunkte, sowie gegebenenfalls weitere netzseitige Einrichtungen. Die Teilnehmerstationen und die Funkzugangseinrichtungen sind in einem Funkkommunikationssystem über eine Funkschnittstelle miteinander verbunden. Die Versendung von Daten von einer Teilnehmerstation zu einer Funkzugangseinrichtung erfolgt in Aufwärtsrichtung, diejenige von einer Funkzugangseinrichtung zu einer Funkstation in Abwärtsrichtung.

Funkkommunikationssysteme können sich z.B. durch ihre Funkzugangstechnologie oder Übertragungsverfahren, durch Netzwerksbetriebssysteme und Netzwerkprotokolle unterscheiden. Funknetze mit einem räumlich stark begrenzten Funkabdeckungsbereich nennt man WLANs (Wireless Local Area Networks).

Beispiele für Funkkommunikationssysteme sind Systeme nach den Standards GSM (Global System for Mobile Communications), GPRS (General Packet Radio Service), EDGE (Enhanced Data Rates for GSM Evolution), TSM (Time Division Synchronous Code Division Multiple Access), DECT (Digital European Cordless Telephony), IS95 (Interim Standard No. 95), cdma2000, UMTS (Universales mobiles Telekommunikationssystem), IEEE 802.11 und Bluetooth, sowie Systeme der vierten Generation.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Dabei findet häufig (zum Beispiel bei GSM, TETRA (Terrestrial Trunked Radio), DECT, UMTS) eine Unterteilung des Übertragungsmediums in Frequenz- und/oder Zeitkanäle entsprechend der Funkschnittstelle statt. Auch Kombinationen mehrerer dieser Verfahren werden angewendet. Um einen sparsamen Umgang mit den knappen Funkressourcen zu ermöglichen, befinden sich in Funkkommunikationssystemen Einrichtungen, wie z.B. Steuereinrichtungen, welche die Funkressourcen verwalten bzw. eine Ressourcenzuteilung vornehmen. Die Funkressource einer Funkschnittstelle kann hierbei zum Beispiel ein Zeitschlitz-Frequenz-Paar oder auch nur eines von beiden (Zeitschlitz oder Frequenz), oder auch eine Mehrzahl von Frequenzbändern sein.

Eine Mehrzahl von Funkkommunikationssystemen mit ihren jeweiligen Funknetzen kann unter dem Begriff heterogenes Netzwerk zusammengefasst werden. Ein solches heterogenes Netzwerk kann Komponenten von verschiedenen Herstellern und Betreibern enthalten. Die in den einzelnen Funkkommunikationssystemen eines heterogenen Netzwerkes eingesetzten Technologien können sich unterscheiden. Eine Überlappung der Funkabdeckungsbereiche von zumindest manchen der einzelnen Funknetze ist in der Regel zumindest in einem örtlich begrenzten Bereich gegeben.

Der Erfindung liegt die Aufgabe zugrunde, ein Verfahren der eingangs genannten Art aufzuzeigen, welches eine effiziente Verwendung von knappen Funkressourcen ermöglicht. Ferner soll ein geeignetes Funkkommunikationssystem und eine ebensolche Netzeinrichtung der eingangs genannten Art zur Durchführung eines derartigen Verfahrens aufgezeigt werden.

Diese Aufgabe wird bezüglich des Verfahrens durch ein Verfahren mit den Merkmalen des Anspruchs 1 gelöst.

Vorteilhafte Ausgestaltungen und Weiterbildungen sind Gegenstand von Unteransprüchen.

In dem Funkkommunikationssystem stehen zur Kommunikation von Teilnehmerstationen mindestens ein erstes und mindestens ein zweites Frequenzband zur Verfügung. Erfindungsgemäß erfolgt die Kommunikation von Teilnehmerstationen auf dem mindestens einen zweiten Frequenzband nach erfolgreichem Zufallszugriff auf Funkressourcen des mindestens einen ersten Frequenzbandes.

In dem Funkkommunikationssystem können zwei Arten von Frequenzbändern zur Kommunikation verwendet werden. Bei der ersten Art, dessen Vertreter das mindestens eine erste Frequenzband ist, handelt es sich um ein vollwertiges Band, auf dessen Funkressourcen Teilnehmerstationen Zufallszugriffe vornehmen können. Unter einem Zufallszugriff wird hierbei eine Anfrage einer Teilnehmerstation nach Funkressourcen zur Kommunikation verstanden. Für den genauen Ablauf des Zufallszugriffs können für das Funkkommunikationssystem spezifische Regelungen gelten. War ein Zufallszugriff erfolgreich, d.h. wurden der zugreifenden Teilnehmerstation Funkressourcen auf dem mindestens einen ersten Frequenzband zur Verfügung gestellt, kann die Teilnehmerstation auf dem betreffenden Frequenzband unter Verwendung der ihr zugewiesenen Funkressourcen kommunizieren. Bei den Funkressourcen kann es sich beispielsweise um einen Zeitschlitz und/oder einen Unterträger des Frequenzbandes und/oder um einen Code und/oder um eine räumliche Richtung handeln.

Die zweite Art von Frequenzbändern, dessen Vertreter das mindestens eine zweite Frequenzband ist, ist in dem Sinne nicht vollwertig, als eine Kommunikation von Teilnehmerstationen auf dem mindestens einen zweiten Frequenzband nicht nach einem erfolgreichen Zufallszugriff auf Funkressourcen dieses Frequenzbandes zustande kommt. Vielmehr müssen die Teilnehmerstationen, welche auf Funkressourcen der zweiten Art von Frequenzband kommunizieren, zuvor einen erfolgreichen Zufallszugriff auf Funkressourcen des mindestens einen ersten Frequenzbandes durchgeführt haben. Die Kommunikation auf der zweiten Art von Frequenzbändern erfolgt somit ausschließlich nach erfolgreichem Zufallszugriff auf Funkressourcen der ersten Art von Frequenzbändern.

Das mindestens eine erste und das mindestens eine zweite Frequenzband können unmittelbar aneinander angrenzen. Dann liegt ein breites Frequenzband vor, welches in die erste Art und die zweite Art von Frequenzbändern aufgeteilt ist. In diesem Fall ist das erfindungsgemäße Verfahren auch auf ein Funkkommunikationssystem, welches ein einziges in die beiden Arten von Frequenzbändern aufteilbares Frequenzband aufweist, anwendbar. Ebenso können in einem Funkkommunikationssystem mehrere in die beiden Arten von Frequenzbändern aufteilbare Frequenzbänder zur Kommunikation von Teilnehmerstationen in dem erfindungsgemäßen Verfahren eingesetzt werden.

In einer Ausgestaltung der Erfindung wird das mindestens eine zweite Frequenzband auch von einem weiteren Funkkommunikationssystem in einem Überlappungsbereich mit dem Funkkommunikationssystem zur Kommunikation genutzt. Die beiden Funkkommunikationssysteme können hierbei gleichartig oder verschiedenartig ausgestaltet sein. Sie können sich z.B. durch ihre Funkzugangstechnologie und/oder Übertragungsverfahren und/oder Netzwerksbetriebssysteme und/oder Netzwerkprotokolle und/oder Betreiber oder auch durch weitere Parameter unterscheiden. Teilnehmerstationen dieser beiden Funkkommunikationssysteme können auf dem gleichen, d.h. einem den beiden Funkkommunikationssystemen gemeinsamen Frequenzband, kommunizieren.

Vorteilhafterweise werden in dem Funkkommunikationssystem betreffend einen zufallzugriff ausschließlich für einen Zufallszugriff auf Funkressourcen des mindestens einen ersten Frequenzbandes relevante Informationen auf dem mindestens einen ersten Frequenzband ausgestrahlt. Den Teilnehmerstationen ist es lediglich möglich, für einen Zufallszugriff relevante Informationen auf dem mindestens einen ersten Frequenzband zu empfangen. Weiterhin betreffen diese Informationen ausschließlich Zufallszugriffe auf Funkressourcen des mindestens einen ersten Frequenzbandes. Insbesondere werden keine Informationen über Zufallszugriffe auf Funkressourcen des mindestens einen zweiten Frequenzbandes ausgestrahlt. Es ist auch nicht nötig, den Teilnehmerstationen durch Signalisierungsinformationen mitzuteilen, dass kein Zufallszugriff auf Funkressourcen des mindestens einen zweiten Frequenzbandes möglich ist. Grundsätzlich ist es vorteilhaft, wenn die Teilnehmerstationen vor dem Zufallszugriff auf das mindestens eine erste Frequenzband keine Kenntnis über die Existenz des mindestens einen zweiten Frequenzbandes bzw. über die Möglichkeit, auf dem mindestens einen zweiten Frequenzband zu kommunizieren, haben. Dies führt zu einer effizienten Verwendung der knappen Funkressourcen in Abwärtsrichtung, da keine Signalisierung über das mindestens eine zweite Frequenzband bzw. über Zufallszugriffe auf Funkressourcen dieses Frequenzbandes an Teilnehmerstationen gesendet werden, bevor diese einen Zufallszugriff auf das mindestens eine erste Frequenzband vornehmen. Die Einsparung von Signalisierungsinformationen kann zu einer Reduzierung der Komplexität der jeweiligen Basisstationen und somit zu einer Kosteneinsparung führen.

In Weiterbildung der Erfindung führt mindestens eine auf dem mindestens einen ersten Frequenzband kommunizierende Teilnehmerstation Messungen an Funkressourcen des mindestens einen zweiten Frequenzbandes durch. Die Durchführung von derartigen Messungen impliziert, dass geeignete Signale auf dem mindestens einen zweiten Frequenzband ausgestrahlt werden. Die Messungen, wie Ermittlung von Signalstärke, Fehlerraten oder Interferenzwerten, können z.B. an auf Funkressourcen des mindestens einen zweiten Frequenzbandes ausgestrahlten Broadcast-Signalen durchgeführt werden.

Die mindestens eine Teilnehmerstation kann zu den Messungen von einer Netzeinrichtung des Funkkommunikationssystems aufgefordert werden. Der Zeitpunkt dieser Aufforderung kann z.B. von der Auslastung der Funkressourcen des mindestens einen ersten und/oder des mindestens einen zweiten Frequenzbandes abhängen, sowie von dem von der Teilnehmerstation angeforderten Dienst und/oder von dem aktuellen Zustand der Kommunikation.

Mit Vorteil kann die Aufforderung Information über die zu vermessenden Funkressourcen und/oder über Zeitpunkte und/oder Dauer und/oder Art der Messungen beinhalten. Hierbei kann es sich z.B. um Frequenzangaben bezüglich des mindestens einen zweiten Frequenzbandes und über Ausstrahlungszeitpunkte von Signalen, an welchen die Messungen erfolgen sollen, handeln. Weiterhin kann eine Teilnehmerstation z.B. aufgefordert werden, eine bestimmte Art von Messung, wie eine Interferenzmessung, über eine bestimmte Zeitspanne ab einem Anfangszeitpunkt durchzuführen.

In einer bevorzugten Ausführungsform wird mindestens eine auf dem mindestens einen ersten Frequenzband kommunizierende Teilnehmerstation von einer Netzeinrichtung des Funkkommunikationssystems zu einem Wechsel zu dem mindestens einen zweiten Frequenzband aufgefordert. Hierbei handelt es sich um eine Aufforderung zu einem Handover zu anderen Funkressourcen. Die Entscheidung darüber, dass ein solcher Handover durchzuführen ist, kann von der Netzeinrichtung, welche die Aufforderung generiert, getroffen werden.

Insbesondere kann die Aufforderung der Netzeinrichtung zu einem Wechsel zu dem mindestens einen zweiten Frequenzband von dem Ergebnis der Messungen der mindestens einen Teilnehmerstation abhängen. So können Messergebnisse, welche auf eine gute Übertragungsqualität auf dem mindestens einen zweiten Frequenzband hinweisen, dazu führen, dass eine Aufforderung zu einem Handover erfolgt. Ergänzend kann die Aufforderung u.a. auch davon abhängen, dass die Teilnehmerstation einen Wechsel befürwortet oder einen solchen vorschlägt.

Es ist auch möglich, dass mindestens eine auf dem mindestens einen ersten Frequenzband kommunizierende Teilnehmerstation einen Wechsel zu dem mindestens einen zweiten Frequenzband initiiert. In diesem Fall geht die Anordnung zum Handover nicht vom Funknetz, sondern von der Teilnehmerstation aus. Das Funknetz wird nach erfolgter Entscheidung über den Handover in der Teilnehmerstation dann über den bevorstehenden oder vollzogenen Handover informiert. Die Entscheidung über den Handover kann in der Teilnehmerstation unter Verwendung der Messergebnisse an den Funkressourcen des mindestens einen zweiten Frequenzbandes erfolgen.

Die oben genannte Aufgabe wird hinsichtlich des Funkkommunikationssystems durch ein Funkkommunikationssystem mit den Merkmalen des Anspruchs 10 gelöst.

Erfindungsgemäß ermöglicht in dem Funkkommunikationssystem ausschließlich das mindestens eine erste Frequenzband einen Zufallszugriff. Ein Zufallszugriff auf Funkressourcen des mindestens einen zweiten Frequenzbandes ist daher in dem erfindungsgemäßen Funkkommunikationssystem nicht möglich.

Das erfindungsgemäße Funkkommunikationssystem eignet sich insbesondere zur Durchführung des erfindungsgemäßen Verfahrens. Daher können weitere Mittel und Vorrichtungen zur Durchführung der Verfahrensschritte in dem Funkkommunikationssystem vorgesehen sein.

Bestandteil eines Funkkommunikationssystems mit einer Mehrzahl von Teilnehmerstationen, wobei in dem Funkkommunikationssystem zur Kommunikation von Teilnehmerstationen mindestens ein erstes und mindestens ein zweites Frequenzband zur Verfügung stehen, kann insbesondere mindestens eine Netzeinrichtung sein. Diese mindestens eine Netzeinrichtung umfasst Mittel, welche es ermöglichen, dass ausschließlich auf dem mindestens einen ersten Frequenzband ein Zufallszugriff für Teilnehmerstationen möglich ist.

Die oben genannte Aufgabe wird hinsichtlich der Netzeinrishtung durch eine Netzeinrichtung mit den Merkmalen des Anspruchs 11 gelöst.

Erfindungsgemäß weist die Netzeinrichtung Mittel zum Anordnen eines Wechsels von mindestens einer auf dem mindestens einen ersten Frequenzband kommunizierenden Teilnehmerstation zu dem mindestens einen zweiten Frequenzband auf. Diese Anordnung für ein Handover kann an die Teilnehmerstation über weitere netzseitige Einrichtungen übermittelt werden.

Die erfindungsgemäße Netzeinrichtung eignet sich insbesondere zur Durchführung des erfindungsgemäßen Verfahrens. Hierzu können weitere Mittel, wie z.B. Mittel zur Auswertung von Messungen der Teilnehmerstation an Funkressourcen des mindestens einen zweiten Frequenzbandes und Mittel zum Entscheiden über einen Wechsel der Teilnehmerstation zu dem mindestens einen zweiten Frequenzband, in der erfindungsgemäßen Netzeinrichtung vorgesehen sein.

Einzelheiten und Details der Erfindung werden im folgenden anhand eines Ausführungsbeispiels näher erläutert. Dabei zeigen
- Figur 1:: einen Ausschnitt zweier Funkkommunikationssysteme,
- Figur 2:: eine Aufteilung von Funkressourcen,
- Figur 3:: ein Ablaufdiagramm eines erfindungsgemäßen Verfahrens,
- Figur 4:: eine schematische Skizzierung des Verfahrens nach Figur 3.

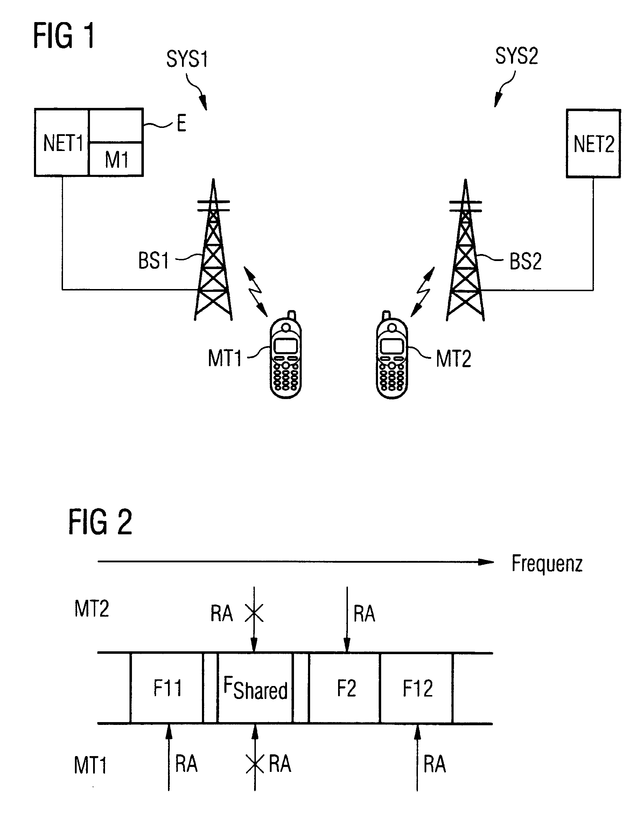

In Figur 1 sind Ausschnitte aus zwei Funkkommunikationssystemen SYS1 und SYS2 dargestellt. Das erste Funkkommunikationssystem SYS1 umfasst eine Teilnehmerstation MT1 in Form einer Mobilstation, eine Funkzugangseinrichtung BS1 und weitere netzseitige Einrichtungen NET1. Bestandteil des ersten Funkkommunikationssystems SYS1 können weitere, gegebenenfalls verschiedenartige, Teilnehmerstationen sein, welche zur Vereinfachung jedoch nicht in Figur 1 dargestellt sind. Das zweite Funkkommunikationssystem SYS2 umfasst eine Funkzugangseinrichtung MT2 in Form einer Mobilstation, eine Basisstation BS2 und weitere netzseitige Einrichtungen NET2.

Bei den beiden Funkkommunikationssystemen SYS1 und SYS2 kann es sich um gleichartige oder verschiedenartige Funkkommunikationssysteme handeln. Z.B. kann das erste Funkkommunikationssystem SYS1 ein System nach einem der Standards GSM oder UMTS sein, während das zweite Funkkommunikationssystem SYS2 ein lokales Netz darstellt. Die Funkabdeckungsbereiche der beiden Funkkommunikationssysteme SYS1 und SYS2 überlappen sich in dem betrachteten Bereich, in welchem sich die Teilnehmerstationen MT1 und MT2 befinden.

In dem ersten Funkkommunikationssystem stehen der Teilnehmerstation MT1 mehrere Frequenzbänder zur Kommunikation mit der Funkzugangseinrichtung BS1 zur Verfügung, welche in Figur 2 dargestellt sind. Hierbei handelt es sich um die Frequenzbänder F11, F12 und F_{shared}. Während die Frequenzbänder F11 und F12 exklusiv von dem ersten Funkkommunikationssystem SYS1 genutzt werden, steht das Frequenzband F_{shared} auch dem zweiten Funkkommunikationssystem SYS2 zur Verfügung. Die Teilnehmerstation MT2 kann daher auf dem Frequenzband F_{shared} mit der Funkzugangseinrichtung BS2 kommunizieren. Aufgrund der Überlappung der Funkabdeckungsbereiche der beiden Funkkommunikationssysteme SYS1 und SYS2 verursachen die Funksignale der beiden Teilnehmerstationen MT1 und MT2 auf dem gemeinsam genutzten Frequenzband F_{shared} Interferenzen zueinander. Dem zweiten Funkkommunikationssystem SYS2 steht ein Frequenzband F2 zur exklusiven Nutzung zur Verfügung, auf welchem innerhalb des ersten Funkkommunikationssystems SYS1 nicht kommuniziert wird. Die in Figur 2 dargestellten Frequenzbänder F11, F_{shared}, F2 und F12 können in beliebiger Reihenfolge angeordnet sein, sie können Frequenzabstände zwischeneinander aufweisen oder sich direkt aneinander anschließen.

Eine Teilnehmerstation, welche aktuell nicht mit ihrer jeweiligen Funkzugangseinrichtung kommuniziert, kann eine Kommunikation durch einen Zufallszugriff auf Funkressourcen einleiten. Während der Zeitspanne, in welcher die Teilnehmerstation nicht kommuniziert, kann sie Signale von Funkzugangseinrichtungen beobachten, vermessen und auswerten. Hierbei handelt es sich insbesondere um Signalisierungsinformationen. Bei einem Zufallszugriff, auch wahlfreier Zugriff genannt, konkurrieren Teilnehmerstationen um gemeinsame Funkressourcen. Hierbei sind Kollisionen von Zufallszugriffs-Signalen gleichzeitig zugreifender Teilnehmerstationen nicht auszuschließen.

Für den Zufallszugriff steht ein Übertragungskanal, z.B. in Form eines bestimmten Zeitschlitzes auf dem Frequenzband, auf dessen Funkressourcen zugegriffen werden soll, zur Verfügung, welcher den Teilnehmerstationen per Signalisierung bzw. Ausstrahlung von Systeminformationen bekannt gegebenen wird.

Erfindungsgemäß nimmt die Teilnehmerstation MT1 wie in Figur 2 dargestellt Zufallszugriffe RA auf die Funkressourcen der Frequenzbänder F11 und F12 vor, welche von dem ersten Funkkommunikationssystem SYS1 exklusiv genutzt werden. Auf die Funkressourcen des von den beiden Funkkommunikationssystemen SYS1 und SYS2 gemeinsam genutzten Frequenzbandes F_{shared} jedoch greift die Teilnehmerstation MT1 nicht per Zufallszugriff RA zu.

Im Beispiel der Figur 2 wurde eine entsprechende Regelung auch in dem zweiten Funkkommunikationssystem SYS2 getroffen: auf Funkressourcen eines exklusiv von diesem System genutzten Frequenzbandes F2 führt die Teilnehmerstation MT2 Zufallszugriffe RA durch, während ein Zufallszugriff auf Funkressourcen des gemeinsam genutzten Frequenzbandes F_{shared} nicht durchgeführt wird. Im Gegensatz hierzu ist es jedoch auch möglich, dass das zweite Funkkommunikationssystem SYS2 eine von dem Verbot des Zufallszugriffs auf die Funkressourcen des gemeinsam genutzten Frequenzbandes F_{shared} des ersten Funkkommunikationssystems SYS1 abweichende Regelung trifft und für die Teilnehmerstation MT2 Zufallszugriffe auf Funkressourcen des gemeinsam genutzten Frequenzbandes F_{shared} zulässt.

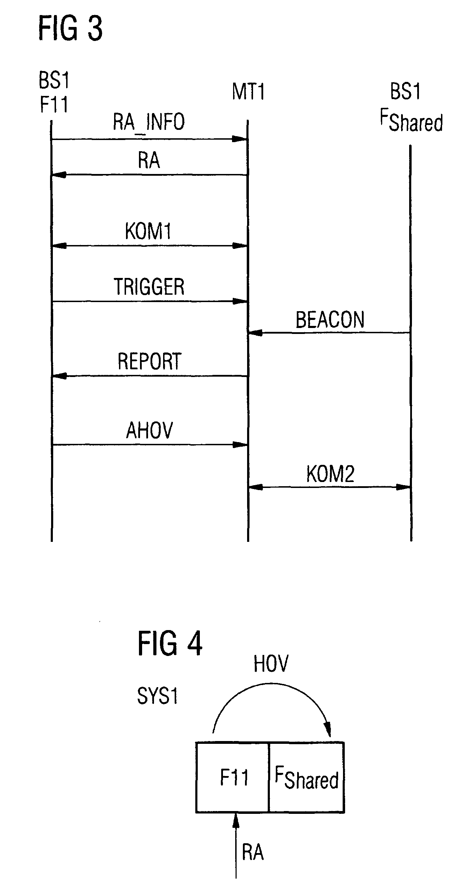

Figur 3 zeigt exemplarisch den Ablauf eines erfindungsgemäßen Verfahrens. Die Teilnehmerstation MT1 des ersten Funkkommunikationssystems SYS1 entnimmt den von der Funkzugangseinrichtung BS1 auf dem exklusiv genutzten Frequenzband F11 per Rundsenderuf (Broadcast) ausgestrahlten Signalisierungsinformationen RA_INFO diejenigen Informationen, welche zur Durchführung eines Zufallszugriff nötig sind, wie z.B. Informationen über den oder die zur Verfügung stehenden Kanäle für den Zufallszugriff, Informationen über aktuell freie, d.h. ungenutzte Funkressourcen, sowie Identifikationsinformation der Funkzuggangseinrichtung und Nachbarzellendeskriptionen, umfassend Informationen über Funkfrequenzen der benachbarten Funkzellen. Die Teilnehmerstation MT1 kann diesen Signalisierungsinformationen RA_INFO entnehmen, dass sie einen Zufallszugriff auf Funkressourcen des Frequenzbandes F11 durchführen kann. Daraufhin unternimmt die Teilnehmerstation MT1 einen Zufallszugriff RA auf Funkressourcen des Frequenzbandes F11. Nach erfolgreichem Zufallszugriff RA kann die Teilnehmerstation MT1 nun mit der Funkzugangseinrichtung BS1 auf dem Frequenzband F11 eine Kommunikation KOM1 durchführen.

Dem ersten Funkkommunikationssystem SYS1 steht neben den exklusiv genutzte Frequenzbändern F11 und F12 auch das gemeinsam mit dem zweiten Funkkommunikationssystem SYS2 genutzte Frequenzband F_{shared} zur Verfügung. Um diese zur Verfügung stehenden Funkressoürcen effizient auszunutzen, wird zumindest ein Teil der auf den exklusiv genutzten Frequenzbändern F11 und F12 ablaufenden Kommunikationen einem Wechsel auf das gemeinsam genutzte Frequenzband F_{shared} unterzogen. Ein Wechsel der für eine Kommunikation verwendeten Funkressourcen wird als Handover bezeichnet.

Ein Handover von Funkressourcen eines exklusiv genutzten Frequenzbandes zu Funkressourcen eines gemeinsam genutzten Frequenzbandes hat den Vorteil, dass nach dem Handover zusätzliche freie Funkressourcen auf dem exklusiv genutzten Frequenzband für Zufallszugriffe zur Verfügung stehen. Somit steigt die Wahrscheinlichkeit, auf dem exklusiv genutzten Frequenzband einen erfolgreichen Zufallszugriff durchzuführen.

Die Durchführung eines Handovers zu Funkressourcen eines gemeinsam genutzten Frequenzbandes kann abhängig gemacht werden von der Übertragungsqualität bzw. dem Quality of Service auf dem exklusiv genutzten Frequenzband, sowie der Auslastung des exklusiv genutzten Frequenzbandes oder der Art bzw. der Verfügbarkeit oder der Dauer der Übertragung des von einer Teilnehmerstation angeforderten Dienstes.

Da Teilnehmerstationen gemäß Figur 2 keinen Zufallszugriff RA auf die Funkressourcen des gemeinsam genutzten Frequenzbandes F_{shared} durchführen, erfolgt eine Kommunikation auf dem gemeinsam genutzten Frequenzband F_{shared} nur nach erfolgtem Handover von einem exklusiv genutzten Frequenzband F11, F12 oder F2 zu Funkressourcen des gemeinsam genutzten Frequenzbandes F_{shared}.

Ein solcher Handover sollte jedoch nur dann vorgenommen werden, wenn auf dem gemeinsam genutzte Frequenzband F_{shared} Funkressourcen zur Verfügung stehen, welche bestimmten Qualitätsanforderungen, die von der Art des von der Teilnehmerstation genutzten Dienstes abhängen können, erfüllen. Hierzu sendet die Funkzugangseinrichtung BS1 der Teilnehmerstation MT1 ein Signal TRIGGER, welches die Teilnehmerstation MT1 über das gemeinsam genutzte Frequenzband F_{shared} informiert. Mit dem Signal TRIGGER wird die Teilnehmerstation MT1 aufgefordert, an Funkressourcen des gemeinsam genutzten Frequenzbandes F_{shared} Qualitätsmessungen wie z.B. Signalpegel- oder BER (Bit Error Rate) -Messungen durchzuführen. Das Signal TRIGGER enthält hierzu den Frequenzbereich, innerhalb dem auf dem gemeinsam genutzten Frequenzband F_{shared} Signale zur Qualitätsmessung ausgesendet werden, sowie Angaben über die Zeitpunkte der Aussendung dieser Signale, und gegebenenfalls über eine Häufigkeit, mit welcher die Signale ausgesandt werden, und eine Zeitspanne, innerhalb welcher die Messungen durchgeführt werden sollen.

Auf dem gemeinsam genutzten Frequenzband F_{shared} wird das Signal BEACON per Rundsenderuf in Abwärtsrichtung ausgestrahlt. Die Teilnehmerstation nimmt aufgrund der Aufforderung durch das Signal TRIGGER Qualitätsmessungen an dem Signal BEACON durch. Es ist auch möglich, dass eine Reihe von identischen Signalen BEACON vermessen werden. Die Ergebnisse dieser Messungen werden auf dem zur Kommunikation KOM1 aktuell genutzten Frequenzband F11 im Rahmen eines Signals REPORT an die Funkzugangseinrichtung BS1 gesendet, welche das Signal REPORT an die Netzeinrichtung E weiterleitet. Diese wertet die Messergebnisse aus und entscheidet, ob ein Handover durchgeführt werden soll. Gemäß Figur 1 weist die Einrichtung E Mittel M1 zum Anordnen eines Handovers zu dem gemeinsam genutzten Frequenzband F_{shared} auf. Es ist auch möglich, dass die Einrichtung E mit beiden Funkkommunikationssystemen SYS1 und SYS2 verbunden ist. In diesem Fall können Handover Vorgänge für beide Funkkommunikationssysteme SYS1 und SYS2 von der Einrichtung E organisiert werden.

Konnte eine Messung innerhalb einer insbesondere in dem Signal TRIGGER festzusetzenden Zeitspanne nicht erfolgreich durchgeführt werden, so kann eine Versendung des Signals REPORT durch die Teilnehmerstation MT1 unterbleiben. Die Einrichtung E kann dann nach dem Ablauf der Zeitspanne entscheiden, dass kein Handover durchgeführt werden soll.

Alternativ zur Entscheidung des Funknetzes über die Durchführung eines Handovers kann diese Entscheidung auch von der Teilnehmerstation MT1 getroffen werden. Hierzu kann sie die Ergebnisse der Messungen an dem Signal BEACON verwenden. Das Funknetz des ersten Funkkommunikationssystems SYS1 wird dann durch das Signal REPORT über die anstehenden Durchführung eines Handovers oder über die Ablehnung eines Handovers von der Teilnehmerstation MT1 informiert.

Im betrachteten Beispiel der Figur 3 wurde entschieden, ein Handover zu Funkressourcen des gemeinsam genutzten Frequenzbandes F_{shared} durchzuführen. Dies wird der Teilnehmerstation MT1 durch das Signal AHOV mitgeteilt. Nach erfolgtem Handover findet eine Kommunikation KOM2 zwischen der Teilnehmerstation MT1 und der Funkzugangseinrichtung BS1 auf dem gemeinsam genutzten Frequenzband F_{shared} statt.

Zu einem späteren Zeitpunkt ist es möglich, ein erneutes Handover durchzuführen, indem von den Funkressourcen des gemeinsam genutzten Frequenzbandes F_{shared} zu exklusiv genutzten Funkressourcen gewechselt wird. Dies ist z.B. dann von Vorteil, wenn die Auslastung des betreffenden exklusiv genutzten Frequenzbandes gering ist oder eine bessere Übertragungsqualität auf dem exklusiv genutzten Frequenzband geboten werden kann. Auch eine Interaktion der beiden Funkkommunikationssysteme SYS1 und SYS2 kann für einen Wechsel einer Teilnehmerstation von gemeinsam zu exklusiv genutzten Funkressourcen hin ausschlaggebend sein: so kann eines der beiden Funkkommunikationssysteme das andere auffordern, Teilnehmer von dem gemeinsam genutzten zu einem exklusiv genutzten Frequenzband wechseln zu lassen, um eine größere Kapazität auf dem gemeinsam genutzten Frequenzband zur eigenen Verfügung zu haben.

Wurde von der Mobilstation MT1 oder von dem Funknetz entschieden, keinen Handover von Funkressourcen des exklusiv genutzten Frequenzbandes F11 zu Funkressourcen des gemeinsam genutzten Frequenzbandes F_{shared} durchzuführen, so kommuniziert die Teilnehmerstation MT1 mit der Funkzugangseinrichtung BS1 weiterhin auf dem exklusiv genutzten Frequenzband F11. Es ist möglich, eine Anfrage entsprechend dem Signal TRIGGER zu einem späteren Zeitpunkt erneut zu versenden.

Figur 4 zeigt schematisch die Verwendung der beiden Frequenzbänder F11 und F_{shared} in dem Verfahren nach Figur 3. Innerhalb des ersten Funkkommunikationssystems SYS1 wird das Frequenzband F11 unter anderem für Zufallszugriffe der Teilnehmerstationen auf Funkressourcen desselben Frequenzbandes verwendet. Unmittelbar nach dem erfolgreichen Zufallszugriff oder nach einer Zeitspanne, während'der die betreffende Teilnehmerstation auf dem Frequenzband F11 kommuniziert hat, wird ein Handover zu Funkressourcen des Frequenzbandes F_{shared} eingeleitet. Nach erfolgtem Handover kommuniziert die Teilnehmerstation auf dem Frequenzband F_{shared}. Der Handover von dem Frequenzband F11 zu dem Frequenzband F_{shared} ist nicht grundsätzlich notwendig, die Teilnehmerstation kann die Kommunikation auch auf dem Frequenzband F11 weiterführen. Eine Kommunikation auf dem Frequenzband F_{shared} kann jedoch nur geführt werden, nachdem ein Zufallszugriff auf das Frequenzband F11 erfolgreich durchgeführt wurde.

Auf dem gemeinsam genutzten Frequenzband F_{shared} werden von der Funkzugangseinrichtung BS1 keine Broadcast Informationen ausgestrahlt, welche für die Durchführung eines erfolgreichen Zufallszugriffs auf Funkressourcen dieses Frequenzbandes nötig sind. Per Broadcast werden auf dem gemeinsam genutzten Frequenzband F_{shared} z.B. nur Synchronisationsinformationen, Ortsinformationen und Informationen zur Leistungssteuerung ausgestrahlt, welche für die bereits zustande gekommenen Kommunikationen zwischen Teilnehmerstationen und der jeweiligen Funkzugangseinrichtung benötigt werden. Die auf dem gemeinsam genutzten Frequenzband F_{shared} verwendeten MAC-Rahmen können die gleiche Struktur wie die MAC-Rahmen von Frequenzbändern aufweisen, auf deren Funkressourcen Zufallszugriffe erlaubt sind, mit dem Unterschied, dass die für die Zufallszugriffe spezifischen Felder entweder unbenutzt bleiben oder für die Übertragung von anderen Informationen verwendet werden. In letzterem Fall ergibt sich dann eine Einsparung von Funkressourcen.

Die Vorgehensweise, dass Teilnehmerstationen der Zufallszugriff nur auf Funkressourcen von exklusiv von einem Funkkommunikationssystem, nicht aber auf gemeinsam verwendeten Frequenzbändern erlaubt ist, erleichtert für den Betreiber des Funkkommunikationssystems die erforderlichen AAA-Verfahren (AAA: Authentication, Authorisation, Accounting). Durch geeignetes Durchführen von Handovers-Vorgängen von Funkressourcen von exklusiv genutzten Frequenzbändern zu gemeinsam genutzten Frequenzbändern kann er die Funkressourcen der exklusiv genutzten Frequenzbänder effizient verwalten und somit eine Mindestkapazität auf den exklusiv genutzten Bändern für eine Aufnahme der Kommunikation durch Teilnehmerstationen per Zufallszugriff schaffen.

Die Kommunikation auf den exklusiv genutzten und den gemeinsam genutzten Frequenzbändern kann unter Verwendung von jeweils unterschiedlicher Funkzugangstechnologien ablaufen. In diesem Fall handelt es sich bei den Teilnehmerstationen um adaptive oder multifunktionale Funkstationen, welche z.B. sowohl unter Verwendung des Mobilfunkstandards GSM als auch unter Verwendung eines CDMA Verfahrens kommunizieren können. Hierzu eignen sich besonders SDR (Software Defined Radio) Funkstationen. Auf den verschiedenen Frequenzbändern können dann verschiedenen Dienste, wie z.B. Übertragung von Sprache, Daten, Videos oder Internetseiten, angeboten werden.

## Patentansprüche

1. Verfahren zum Betreiben eines Funkkommunikationssystems (SYS1) mit einer Mehrzahl von Teilnehmerstationen (MT1), wobei in dem Funkkommunikationssystem (SYS1) zur Kommunikation von Teilnehmerstationen (MT1) mindestens ein erstes (F11, F12) und mindestens ein zweites (F_{shared}) Frequenzband zur Verfügung stehen,
**dadurch gekennzeichnet,**
**dass** in dem Funkkommunikationssystem (SYS1) die Kommunikation (KOM2) von Teilnehmerstationen (MT1) auf dem mindestens einen zweiten Frequenzband (F_{Shared}) nach erfolgreichem Zufallszugriff (RA) auf Funkressourcen des mindestens einen ersten Frequenzbandes (F11, F12) erfolgt.

2. Verfahren nach Anspruch 1, **dadurch gekennzeichnet,**
**dass** das mindestens eine zweite Frequenzband (F_{shared}) auch von einem weiteren Funkkommunikationssystem (SYS2) in einem Überlappungsbereich mit dem Funkkommunikationssystem (SYS1) zur Kommunikation genutzt wird.

3. Verfahren nach Anspruch 1 oder 2, **dadurch gekennzeichnet,**
**dass** in dem Funkkommunikationssystem (SYS1) betreffend einen Zufallszugriff (RA) ausschließlich für einen Zufallszugriff (RA) auf Funkressourcen des mindestens einen ersten Frequenzbandes (F11, F12) relevante Informationen (RA_INFO) auf dem mindestens einen ersten Frequenzband (F11, F12) ausgestrahlt werden.

4. Verfahren nach einem der Ansprüche 1 bis 3, **dadurch gekennzeichnet,**
**dass** mindestens eine auf dem mindestens einen ersten Frequenzband (F11, F12) kommunizierende Teilnehmerstation (MT1) Messungen an Funkressourcen (BEACON) des mindestens einen zweiten Frequenzbandes (F_{Shared}) durchführt.

5. Verfahren nach Anspruch 4, **dadurch gekennzeichnet,**
**dass** die mindestens eine Teilnehmerstation (MT1) zu den Messungen von einer Netzeinrichtung (E) des Funkkommunikationssystems (SYS1) aufgefordert wird.

6. Verfahren nach Anspruch 5, **dadurch gekennzeichnet,**
**dass** die Aufforderung (TRIGGER) Information über die zu vermessenden Funkressourcen (BEACON) und/oder über Zeitpunkte und/oder Dauer und/oder Art der Messungen beinhaltet.

7. Verfahren nach einem der Ansprüche 1 bis 6, **dadurch gekennzeichnet,**
**dass** mindestens eine auf dem mindestens einen ersten Frequenzband (F11, F12) kommunizierende Teilnehmerstation (MT1) von einer Netzeinrichtung (E) des Funkkommunikationssystems (SYS1) zu einem Wechsel zu dem mindestens einen zweiten Frequenzband (F_{Shared}) aufgefordert wird.

8. Verfahren nach einem der Ansprüche 4 bis 7, **dadurch gekennzeichnet,**
**dass** die Aufforderung (AHOV) der Netzeinrichtung (E) des Funkkommunikationssystems (SYS1) zu einem Wechsel zu dem mindestens einen zweiten Frequenzband (F_{Shared}) von dem Ergebnis der Messungen der mindestens einen Teilnehmerstation (MT1) abhängt.

9. Verfahren nach einem der Ansprüche 1 bis 6, **dadurch gekennzeichnet,**
**dass** mindestens eine auf dem mindestens einen ersten Frequenzband (F11, F12) kommunizierende Teilnehmerstation (MT1) einen Wechsel zu dem mindestens einen zweiten Frequenzband (F_{Shared}) initiiert.

10. Funkkommunikationssystem (SYS1) mit einer Mehrzahl von Teilnehmerstationen (MT1),
wobei in dem Funkkommunikationssystem (SYS1) zur Kommunikation von Teilnehmerstationen (MT1) mindestens ein erstes (F11, F12) und mindestens ein zweites (F_{Shared}) Frequenzband zur Verfügung stehen,
**dadurch gekennzeichnet,**
**dass** ausschließlich das mindestens eine erste Frequenzband (F11, F12) einen Zufallszugriff (RA) auf Funkressourcen ermöglicht.

11. Netzeinrichtung (E) in einem Funkkommunikationssystem (SYS1),
wobei in dem Funkkommunikationssystem (SYS1) zur Kommunikation von Teilnehmerstationen (MT1) mindestens ein erstes (F11, F12) und mindestens ein zweites (F_{Shared}) Frequenzband zur Verfügung stehen,
und wobei die Kommunikation von Teilnehmerstationen (MT1) auf dem mindestens einen zweiten Frequenzband (F_{Shared}) nach erfolgreichem Zufallszugriff (RA) auf Funkressourcen des mindestens einen ersten Frequenzbandes (F11, F12) erfolgt,
**dadurch gekennzeichnet,**
**dass** die Netzeinrichtung (E) Mittel (M1) zum Anordnen eines Wechsels von mindestens einer auf dem mindestens einen ersten Frequenzband (F11, F12) kommunizierenden Teilnehmerstation (MT1) zu dem mindestens einen zweiten Frequenzband (F_{Shared}) aufweist.
